(19) Europäisches Patentamt
European Patent Office
Office européen des brevets

(11) **EP 1 967 320 A1**

(12) **EUROPEAN PATENT APPLICATION**

(43) Date of publication:
**10.09.2008 Bulletin 2008/37**

(51) Int Cl.:
**B23Q 11/00** *(2006.01)*    **B23Q 15/12** *(2006.01)*

(21) Application number: **07103787.3**

(22) Date of filing: **08.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor Toegepast-Natuurwetenschappelijk Onderzoek TNO**
**2628 VK  Delft (NL)**

(72) Inventor: **Doppenberg, Edward Jacobus Johannes**
**2613 AT Delft (NL)**

(74) Representative: **van Loon, C.J.J. et al**
**Vereenigde**
**Johan de Wittlaan 7**
**2517 JR Den Haag (NL)**

(54) **Method and system for reducing milling failure**

(57)    Method for reducing milling failure in a machining tool due to coincidence between first vibrations v1 substantially caused by mutually exerted forces between the machining tool and an object being machined, and second vibrations v2 substantially caused by mechanical resonance by or in the the machining tool itself and/or one or more subsystems of the machining tool. The method comprising the steps of detecting frequencies of v1 and the frequencies of v2; determining the extent of the coincidence between the frequencies of v1 and the frequencies of v2. If the extent of coincidence between the frequencies of v1 and at least one of any of the frequencies of v2 is within a certain range, the vibration causing said coincidence between the frequencies of v1 and at least one of any of the frequencies of v2 is counteracted. To counteract said coincidence the respective frequencies of v1 and v2 one or more machining parameters may changed or relevant vibrational characteristics of the machining tool itself are changed by means of passive or active components, e.g. actuators.

$$S_u(f,\Omega)$$

Figure 2

EP 1 967 320 A1

**Description**

<u>Field of the invention</u>

The invention concerns a method and a system for reducing milling failure in a machining tool due to coincidence between vibrations (v1) substantially caused by mutually exerted forces between the machining tool and an object being machined, and vibrations (v2) which are substantially caused by mechanical resonance by or in the machining tool itself and/or subsystems of the machining tool.

<u>Background of the invention</u>

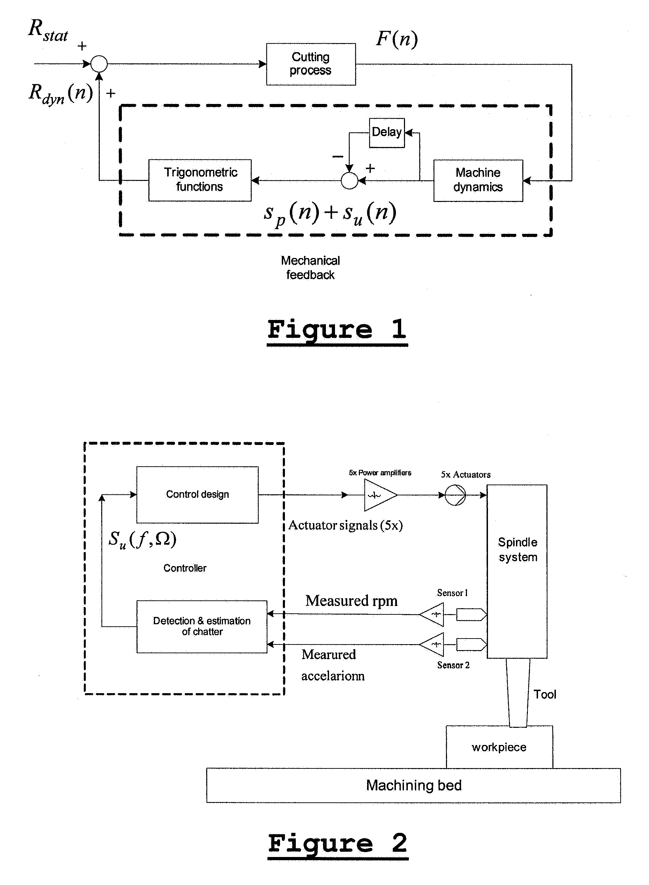

In Figure 1, a block diagram of the milling process is shown. The static thickness $h_{stat}$ is a result of the pre-defined motion (cutting) of the tool with respect to the work piece. The chip thickness results in the force $F(t)$ that acts on the tool via the cutting process (block Cutting process). Interaction of this force with the spindle and tool dynamics (block Machine dynamics), results in a dynamic displacement of the tool $s_p(t)$, which is superimposed on the pre-defined tool motion. Via mechanical feedback (block Mechanical feedback), a dynamic chip thickness $R_{dyn}(t)$ is added to the static chip thickness.

In the milling process, the static chip thickness is periodic, with a period time $T = \tau = \dfrac{1}{f_t} = \dfrac{60}{N_z \Omega}$. Here, $\tau$ is the delay as mentioned in the block Delay (due to the regenerative effect), $N_z$ is the number of teeth on the cutter, and $\Omega$ the spindle speed in rpm. The block Delay is a perturbation on that periodic movement is denoted by $s_u(t)$. If no chatter occurs, the periodic movement $s_p(t)$ is stable, and the perturbation motion $s_u(t)$ tends to zero asymptotically. When the periodic movement $s_p(t)$ becomes unstable (i.e. with an increasing axial depth-of-cut), the perturbation $s_u(t)$ with a different frequency $f_c$ is superimposed on the original movement $s_p(t)$. This perturbation motion $s_u(t)$ is strongly correlated with the dynamic chip thickness $R_{dyn}(t)$ and can be used as a measure for $R_{dyn}(t)$. Here $f_c$ is referred to as the basic chatter frequency.

The unstable perturbation movement is referred to as 'chatter'. The change from stable to unstable movement is general referred to as the onset to 'chatter'.

<u>Summary of the invention</u>

One aim of the present invention is to reduce milling failure in a machining tool due to coincidence between the fundamental frequency and/or at least one harmonic frequency of first vibrations v1 substantially caused by mutually exerted forces between the machining tool and an object being machined, and the fundamental frequency and/or at least one harmonic frequency of second vibrations v2 substantially caused by mechanical resonance by or in the machining tool itself and/or one or more subsystems of the machining tool.

Hereinafter the vibrations v1 may be called "machin*ing* vibrations", while the vibrations v2 may be called "tool vibrations" or "machine vibrations".

According to the invention, next steps are preferred to reach its aim:

- detect the fundamental frequency and/or harmonic frequencies of the vibrations v1 and the fundamental frequency and/or harmonic frequencies of the vibrations v2;
- determine the extent of the coincidence between the fundamental frequency and/or harmonic frequencies of the vibrations v1 and the fundamental frequency and/or harmonic frequencies of the vibrations v2;
- if the extent of coincidence between the fundamental frequency and/or harmonic frequencies of the vibrations v1 and at least one of any of the fundamental frequency and/or harmonic frequencies of the vibrations v2 is within a certain range, the vibration causing said coincidence between the fundamental frequency and/or harmonic frequencies of the vibrations v1 and at least one of any of the fundamental frequency and/or harmonic frequencies of the vibrations v2 is counteracted.

In many cases it may be preferred to counteract said coincidence between the fundamental frequency and/or harmonic frequencies of the vibrations v1 and at least one of any of the fundamental frequency and/or harmonic frequencies of the vibrations v2 - which may form a threat for mechanical resonant rise and/or system instabilities - by changing one or more machining parameters, like speed, material supply etc., thus influencing the machining vibrations v1 and take away the threat. At least some machining parameters could be changed by using passive or active components (e.g. actuators).

Said coincidence, however, may additionally or instead, be counteracted by changing the (vibrational) characteristics of the milling machine itself, e.g. by means of passive or active components (e.g. actuators), thus influencing the machine vibrations v2 and take away the threat that way.

The invention includes a system which is arranged to perform the method as outlined hereinabove under control of control means, the system comprising relevant detection means for vibration detection, determination means for determinating possible mechanical resonance threat, and counteracting means, e.g. comprising passive or active components, for counteracting the resonance threat.

Advantageous of the preferred method and system presented here is the avoidance of chatter and suppression of vibration during machining (in process), aiming at combined efficiency and accuracy improvements. This approach is very applicable to processes with e.g. very varying machining conditions as well for machining with constant machining conditions.

Exemplary Embodiment

Figure 1 shows a block diagram of the milling process;
Figure 2 shows a diagram of the control system;
Figure 3 shows a chatter control system using one actuator system;
Figure 4 shows an outline of the control algorithm;
Figure 5 illustrates detection of RP;
Figure 6 illustrates the estimation of the regenerative process;
Figure 7 illustrates adaptive control and control design.

Turning to figure 1 first, the phenomena of chatter are intuitively better understood by considering the milling process as a mechanical control system with a positive feedback loop. The system is configured as a 'regenerative vibrations process', and is therefore inherent unstable.

One aspect to prevent chatter is to maintain the synchronization of succeeding wavy surfaces, keeping dynamic chip thickness $R_{dyn}(t)$ constant. Machine designers use passive strategies to prevent regenerative vibrations by absorbing the vibration energy, or by redirecting the vibration energy [Semercigil and Chen, 2002; Tarng et al, 2000]. A new trend in the design approach to control chatter behaviour, is to optimize the machine's dynamic behaviour at the design process, maximizing stiffness and optimizing damping of the entire cutting system [Zhang and Sims, 2005; Kyung and Lee, 2003].

The objective of the abovementioned strategies is to minimize the energy feedback of the unwanted regenerative vibrations to the cutting process for a vast range of machining parameters. From a control-engineering viewpoint, these design strategies focus on a control (indirectly) of the properties of the regenerative vibration process, by 'tuning' the machine dynamics at the design process [Altintas and Cao, 2005].

The general disadvantage of existing solutions is all contra measure to prevent chatter is done off line, thus not during milling. The main disadvantage is that the existing solutions try to predict (in advance, thus offline) spindle speed regions of stable machining, which are less sensitive to chatter. The set of machining parameters is then determined. The prediction is done only once prior to the machining. Case studies and practical experience have shown that this strategy is limited and only apply to processes with very constant machining conditions (e.g. machining of large aero frame structures of aluminium). In other industrial areas, like mould making and precision part production, this strategy is not possible because of varying process conditions.

A more elegant approach is controlling the regenerative vibration process during milling actively, which means sensing the milling process, detecting and estimating chatter in an early stage and eventually actively control the mechanical feedback path properties to prevent full blown chatter. Two approaches are possible:

I. Changing the dynamic properties of the mechanical feedback path during milling, by exciting the machine dynamics, using actuators (e.g. shakers or piezo stacks), maximizing stiffness and optimizing damping of the entire cutting system. A control system could provide the optimal actuator signals. A drawback of this approach may be that the dynamics of the cutting system has to be accurately modelled in advance to achieve robust performances. Dynamic changes during milling may deteriorate the performance of the control system and the system thus may fail. A need to track model changes would be necessarily to maintain robust performances.

II. Another method is based on eliminating the feedback path to the cutting process, in which case the dynamic chip thickness ($R_{dyn}(t)$) would be zero. In practice only partial elimination of the feedback path would be possible for a small selectable frequency region, which coincides with the chatter frequency. This will minimize the energy feedback of the unwanted regenerative vibrations to the cutting process for the selected frequency region. An actuator signal can be extracted from the chatter frequency, the harmonic frequency of the spindle rotation frequency, which coincides with the chatter frequency. The relevant control algorithm is simple and straight forward. The major advantage of this approach is, that there is no need to model the cutting system in advance or keep track of changes in the dynamic behaviour of the system during cutting. In this preferred method according to the invention only the detection and estimation of the chatter frequency has to be performed during the milling process. The preferred control strategy presented here effectively opens a positive feedback loop and cancels out any regenerative mechanism for a selectable frequency region.

To realize this approach a number of properties of the milling process needs to be detected or estimated in the process, e.g.

a. detection of onset of chatter;
b. detection of chatter frequency $f_c$;
c. estimation of the harmonic frequency $f_{harmonic}$ of the spindle speed, which coincides with the chatter frequency;
d. estimation of the (energy) transfer function between the spindle speed and the regenerative process (chatter) in the frequency range $f_c$ and $f_{harmonic}$.

After this, next actions could be taken:

e. change the energy transfer function, by actuating the spindle system with e.g. a 1 to 5 DOF (degrees of freedom) actuator system in the frequency range $f_c$ and $f_{harmonic}$;
f. calculate real time the optimal actuator signal.

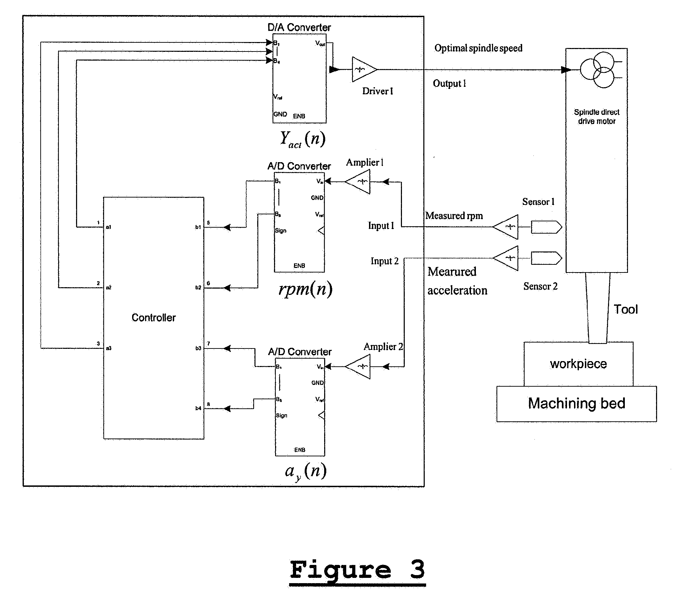

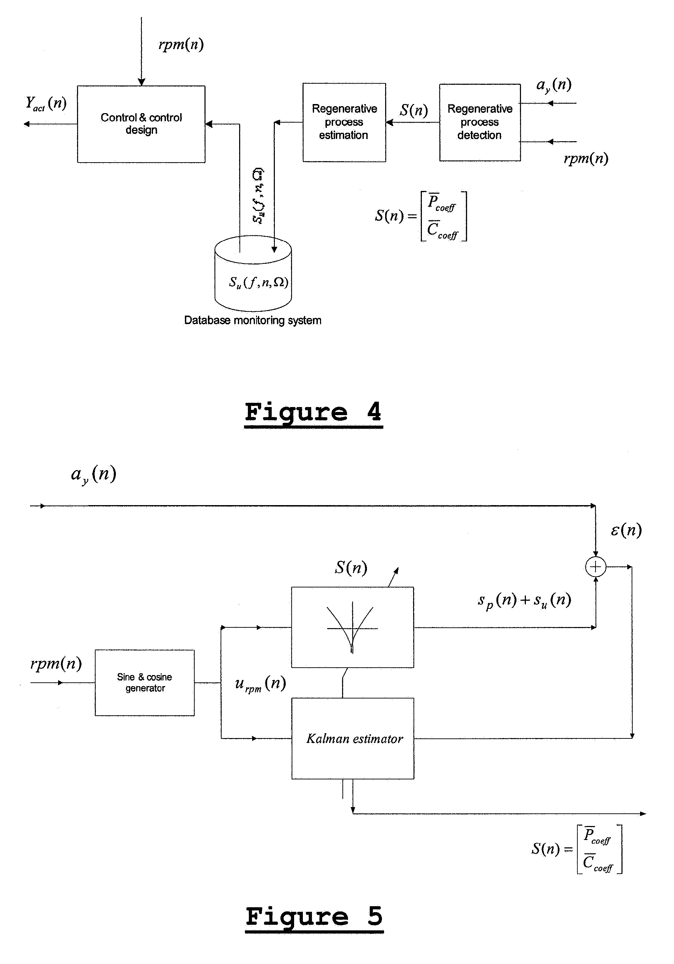

Figure 2 shows that during machining two types of sensors may be used to measure and to digitise the spindle speed (rpm) and the vibration (acceleration) of the bottom spindle bearing. The controller processes the measured signals to detect and estimate the perturbation motion $s_u(t,\Omega)$, which is used as measure for chatter. The 'control design' calculates the optimal actuator signals to excite the spindle system (by exciting the spindle dynamics, using shakers or piezo stacks) with the main objective to minimise the perturbation motion $s_u(t,\Omega)$. This control process effectively minimises the energy transfer between the spindle speed and the regenerative process in the frequency range $f_c$ and $f_{harmonic}$. Eventually the regenerative mechanism will be cancelled out.
The relative simple implementation is the use of a one actuator system to excite 1 DOF. The direct drive motor of the spindle system is used as actuator to excite the dynamics of the spindle system. In this case the rotation of the spindle system is changed to minimise the perturbation motion $s_u(t,\Omega)$. The 'control design' calculates the optimal spindle speed at which the energy transfer function is minimised, see figure 3. A demonstrator has been implemented on a Dspace control system.
The algorithm is decomposed in 3 functionalities as depicted in figure 4:

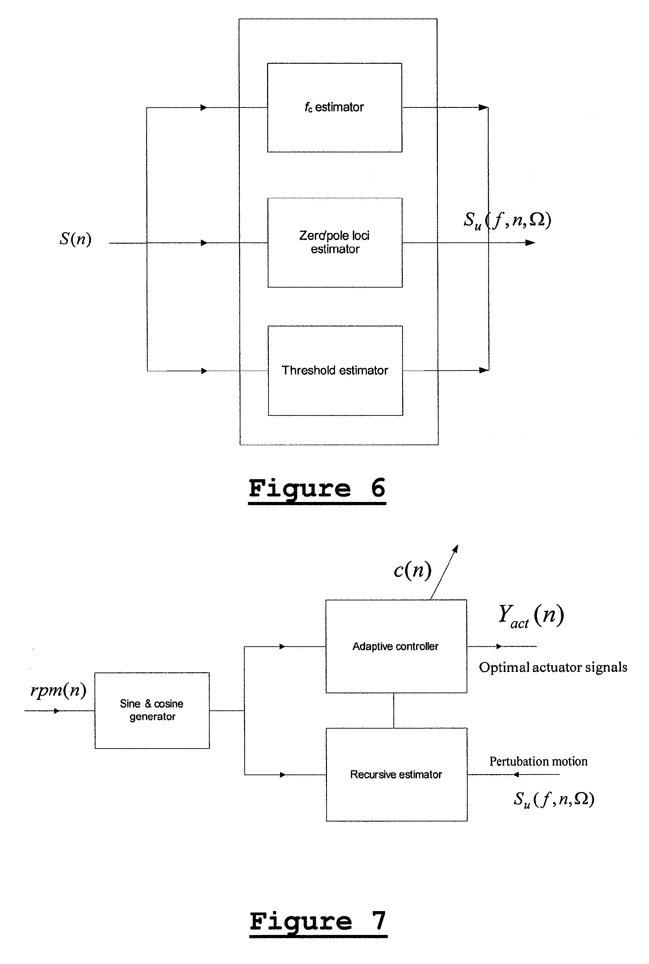

- Detection of the regenerative process (figure 5);
- Estimation of the regenerative process (figure 6);
- Adaptive control and control design (figure 7).

General Parametric model (1) is selected for the detection and estimate the regenerative process (RP) (see figures 5 and 6).

$$A(q)y(n) = \frac{B(q)}{F(q)}u(n) + \frac{C(q)}{D(q)}e(n) \qquad\qquad (1)$$
$$, n = \text{time index}$$

Selecting the order of the polynomials $A(q)$ up to $F(q)$ determines the type of model for the RPM periodic components $\hat{s}_p(n)$ and the perturbation motion $\hat{s}_u(n)$;

$$\widehat{a}_y(n) = \hat{s}_p(n) + \hat{s}_u(n) = B(q)u(n) + \frac{1}{D(q)}\xi(n) \tag{2}$$

with,

$$u_{rpm}(n) = \sum_{k=1}^{N}\{\cos(2\pi k f_{rpm}n) + i\sin(2\pi k f_{rpm}n)\} \tag{3}$$

$$\xi(n),\ \text{White noise, zero mean,}\ \sigma^2 = 1. \tag{4}$$

From measured cutter movement $a_y(n)$, the prediction error becomes:

$$f_R(n) = a_y(n) - \widehat{a}_y(n-1) \tag{5}$$

The time update of the model is performed using the algorithm scheme (6..9)

$$\hat{\theta}(n) = \begin{bmatrix} B_n(q) & D_n^{-1}(q) \end{bmatrix} \tag{6}$$

$$\hat{\theta}(n) = \hat{\theta}(n-1) + K(n)f_R(n) \tag{7}$$

$$K(n) = \Phi(n)\psi(n) \tag{8}$$

$$\psi(n) = \begin{bmatrix} u(n) & \upsilon(n) \end{bmatrix}^T \tag{9}$$

Polynomial $B_n(q)$ describes the properties of the RPM periodic components $s_p(n)$;

Polynomial $D_n(q)$ describes the properties of the perturbation motion $s_u(n)$.

The model $D_n(q)$ describes the perturbation motion $s_u(n)$ as a mathematical function and with well known tools the chatter frequency $f_c(n)$ and the state space $S(n) = V_u(f,n,\Omega)$ can be calculated.

Referring to figure 7 now, the control coefficients $c(n)$ are estimated using a gradient-based adaptation. The implementation of the gradient is a recursive algorithm. $c(n)$ will evolve with time index $n$.

$Y_{act}(n) = RPM_{eff}(n)$ is the effective spindle speed and calculated using formula (11)

*The algorithm*

$$RPM_{eff}(n) = RPM_{init}(1 + c_n(q)) \qquad (10)$$

The recursive adaptation according to (12)

$$c(n) = c(n-1) - \mu\{\Theta(n)\}sign(f_{onset}(n))$$

$$\Theta(n) = \left| \alpha \frac{\{V(f_c,n) - \delta_0\}}{pow(V(f_c,n))} \right| \qquad (11)$$

$$f_{onset}(n) = K_{int}(n) - K_{frac}(n)$$

$K_{int}$ = harmonic number at which $f_c$ is manifest

$$K_{int}(n) = N_z * int\left\{0.5 + \frac{f_c(n)}{N_z * f_{rpm}(n)}\right\} \qquad (12)$$

$$K_{frac}(n) = \frac{f_c(n)}{f_{rpm}(n)} - N_z * int\left\{0.5 + \frac{f_c(n)}{N_z * f_{rpm}(n)}\right\} \qquad (13)$$

$N_z$ = number of teeth on the cutter

**Claims**

1. **Method** for reducing milling failure in a machining tool due to coincidence between the fundamental frequency and/or at least one harmonic frequency of first vibrations v1 substantially caused by mutually exerted forces between the machining tool and an object being machined, and the fundamental frequency and/or at least one harmonic frequency of second vibrations v2 substantially caused by mechanical resonance by or in the machining tool itself and/or one or more subsystems of the machining tool, the method comprising next steps:

   - detect the fundamental frequency and/or harmonic frequencies of the vibrations v1 and the fundamental frequency and/or harmonic frequencies of the vibrations v2;
   - determine the extent of the coincidence between the fundamental frequency and/or harmonic frequencies of the vibrations v1 and the fundamental frequency and/or harmonic frequencies of the vibrations v2;
   - if the extent of coincidence between the fundamental frequency and/or harmonic frequencies of the vibrations v1 and at least one of any of the fundamental frequency and/or harmonic frequencies of the vibrations v2 is within a certain range, the vibration causing said coincidence between the fundamental frequency and/or harmonic frequencies of the vibrations v1 and at least one of any of the fundamental frequency and/or harmonic frequencies of the vibrations v2 is counteracted.

2. Method according to claim 1, wherein, to counteract said coincidence between the fundamental frequency and/or harmonic frequencies of the vibrations v1 and at least one of any of the fundamental frequency and/or harmonic frequencies of the vibrations v2 one or more machining parameters are changed.

3. Method according to claim 1 or 2, wherein, to counteract said coincidence between the fundamental frequency and/or harmonic frequencies of the vibrations v1 and at least one of any of the fundamental frequency and/or harmonic frequencies of the vibrations v2, relevant vibrational characteristics of the machining tool itself are changed.

4. Method according to claim 2 or 3, wherein said one or more machining parameters are changed and/or said relevant vibrational characteristics of the machining tool itself are changed by means of either passive or active components.

5. **System** for reducing milling failure in a machining tool due to coincidence between the fundamental frequency and/or at least one harmonic frequency of first vibrations v1 substantially caused by mutually exerted forces between the machining tool and an object being machined, and the fundamental frequency and/or at least one harmonic frequency of second vibrations v2 substantially caused by mechanical resonance by or in the machining tool itself and/or one or more subsystems of the machining tool, the system comprising

   - detection means to detect the fundamental frequency and/or harmonic frequencies of the vibrations v1 and the fundamental frequency and/or harmonic frequencies of the vibrations v2;
   - determination means cooperating with said detection means and arranged to determine the extent of the coincidence between the fundamental frequency and/or harmonic frequencies of the vibrations v1 and the fundamental frequency and/or harmonic frequencies of the vibrations v2;
   - counteracting means cooperating with the determination means and arranged to counteract, if the extent of coincidence between the fundamental frequency and/or harmonic frequencies of the vibrations v1 and at least one of any of the fundamental frequency and/or harmonic frequencies of the vibrations v2 is within a certain range, the vibration causing said coincidence between the fundamental frequency and/or harmonic frequencies of the vibrations v1 and at least one of any of the fundamental frequency and/or harmonic frequencies of the vibrations v2.

6. System according to claim 5, said counteracting means are arranged to change one or more machining parameters.

7. System according to claim 5 or 6, said counteracting means are arranged to change relevant vibrational characteristics of the machining tool itself.

8. System according to claim 6 or 7, said counteracting means comprising passive and/or active components arranged to change said one or more machining parameters and/or to change said relevant vibrational characteristics of the machining tool.

**Figure 1**

**Figure 2**

**Figure 3**

# Figure 4

# Figure 5

$S(n)$

$f_c$ estimator

Zero/pole loci estimator

Threshold estimator

$S_u(f, n, \Omega)$

## Figure 6

$c(n)$

$Y_{act}(n)$

Adaptive controller

Optimal actuator signals

$rpm(n)$

Sine & cosine generator

Recursive estimator

Pertubation motion

$S_u(f, n, \Omega)$

## Figure 7

EP 1 967 320 A1

**European Patent Office**

**EUROPEAN SEARCH REPORT**

Application Number

EP 07 10 3787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 170 358 A (DELIO THOMAS S [US]) 8 December 1992 (1992-12-08) | 1,2,5,6 | INV. B23Q11/00 |
| Y | * column 2, line 16 - column 2, line 37; figures 1,5 * * column 10, line 15 - column 10, line 63 * * column 11, line 41 - column 11, line 54 * ----- | 3,4,7,8 | B23Q15/12 |
| Y | US 4 047 469 A (SAKATA OKITSUGU) 13 September 1977 (1977-09-13) * column 3, line 3 - column 3, line 24 * ----- | 3,4,7,8 | |
| Y | US 6 189 426 B1 (SEGALMAN DANIEL J [US] ET AL) 20 February 2001 (2001-02-20) * column 3, line 9 - column 3, line 33 * ----- | 3,4,7,8 | |
| A | EP 1 288 745 A1 (MORI SEIKI SEISAKUSHO KK [JP]; INTELLIGENT MFG SYSTEMS INTERN [US]) 5 March 2003 (2003-03-05) * page 5, column 8, line 32 - page 5, column 8, line 52 * * page 7, column 12, line 24 - page 7, column 12, line 37 * ----- | 1-8 | |
| A | US 3 967 515 A (NACHTIGAL CHESTER L ET AL) 6 July 1976 (1976-07-06) * column 2, line 46 - column 3, line 30 * ----- | 1-8 | |

| | |
|---|---|
| TECHNICAL FIELDS SEARCHED (IPC) | B23Q G05B |

The present search report has been drawn up for all claims

| Place of search | Date of completion of the search | Examiner |
|---|---|---|
| Munich | 3 August 2007 | Dalton, Helen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

12

**EP 1 967 320 A1**

**ANNEX TO THE EUROPEAN SEARCH REPORT
ON EUROPEAN PATENT APPLICATION NO.** EP 07 10 3787

03-08-2007

| Patent document cited in search report | | Publication date | Patent family member(s) | | Publication date |
|---|---|---|---|---|---|
| US 5170358 | A | 08-12-1992 | NONE | | |
| US 4047469 | A | 13-09-1977 | JP | 951342 C | 25-05-1979 |
| | | | JP | 51053686 A | 12-05-1976 |
| | | | JP | 53026865 B | 04-08-1978 |
| US 6189426 | B1 | 20-02-2001 | NONE | | |
| EP 1288745 | A1 | 05-03-2003 | DE | 60200287 D1 | 29-04-2004 |
| | | | DE | 60200287 T2 | 10-03-2005 |
| | | | JP | 2003053643 A | 26-02-2003 |
| | | | US | 2003029240 A1 | 13-02-2003 |
| US 3967515 | A | 06-07-1976 | NONE | | |